# EUROPÄISCHE PATENTSCHRIFT

(11) **EP 0 876 996 B1**
(45) Veröffentlichungstag und Bekanntmachung des Hinweises auf die Patenterteilung: **19.12.2001**
(21) Anmeldenummer: 98107792.8
(22) Anmeldetag: 29.04.1998
(51) Int. Cl.: C01F 11/46, C04B 11/024

(54) **Verfahren zum Herstellen von Calciumsulfat-Alphahalbhydrat**
Process for the preparation of calcium sulfate-alpha hemi-hydrate
Procédé de préparation de alpha hémi-hydrate de sulfate de calcium

(30) Priorität: 10.05.1997 DE 19719794
(43) Veröffentlichungstag der Anmeldung: 11.11.1998
(73) Patentinhaber: SICOWA Verfahrenstechnik für Baustoffe GmbH & Co. KG, 50129 Bergheim (DE); ProMineral Gesellschaft zur Verwendung von Mineralstoffen mbH, 50129 Bergheim (DE)
(72) Erfinder: Wiesgickl, Günther, Dr., 91550 Dinkelsbühl (DE)
(74) Vertreter: Schmidt, Frank-Michael, Dr.-Ing.

(56) Entgegenhaltungen:
- EP-A- 0 021 474
- WO-A-90/11256
- DE-A- 2 310 799
- GB-A- 1 246 664
- US-A- 3 961 105
- US-A- 4 091 080
- US-A- 5 015 449

## Beschreibung

Die Erfindung betrifft ein Verfahren zum Herstellen von Calciumsulfat-Alphahalbhydrat nach dem Oberbegriff des Anspruchs 1.

Zum Umkristallisieren von Calciumsulfat-Dihydrat in Calciumsulfat-Alphahalbhydrat sind verschiedene Verfahren bekannt, die man hauptsächlich in ein "Trocken-" und ein "Naß"-Verfahren einteilen kann.

Beim Trockenverfahren werden Dihydratknorpel aus natürlichen Vorkommen etwa in Bernsteinsäure als Kristallisationshilfsmittel getaucht und anschließend in einem Autoklaven bei Temperaturen über 100°C in Sattdampfatmosphäre zu Alphahalbhydrat umkristallisiert. Abgesehen davon, daß die gleichmäßige Durchdringung der Knorpel mit Bernsteinsäure problematisch ist, ergibt sich im allgemeinen eine schalenweise Umkristallisation mit entsprechend ungleichmäßigen, häufig unerwünscht nadelförmigen Kristallen. Man wünscht aber große, fleischige, gegebenenfalls säulenförmige Kristalle zu erhalten, die dann zu gedrungenen Kristallen aufgemahlen werden. Dies wird durch die schalenweise Umkristallisation trotz der Zugabe des Kristallisationshilfsmittels aber nur sehr unvollkommen erreicht. Abgesehen davon bleibt die Bernsteinsäure erhalten und wirkt im Endprodukt als Verzögerer. Dieser Wirkung kann man zwar durch Zugabe eines Beschleunigers entgegenwirken, jedoch beeinträchtigt dies die Endfestigkeit.

Beim Naßverfahren wird eine Aufschlämmung von Dihydratpartikeln entsprechend autoklaviert. Das überschüssige Wasser wird über Siebe abgezogen. Zugegebene Bernsteinsäure ist dementsprechend in wechselnden Mengen enthalten, wodurch es schwierig ist, eine bestimmte Produktqualität sicherzustellen. Ein derartiges Verfahren ist beispielsweise in DE 23 10 799 A1 beschrieben, bei dem man zur Herstellung von im wesentlichen würfelförmigen Kristallen neben dem Kristalltrachtmodifikator in Form von Bernsteinsäure ein Salz zur Regelung der Kristallgröße in einer Menge von 0,1 bis 1,2 Gew.-% einsetzt. Hierbei wird bei einem Druck von etwa 1,2 bis 1,7 bar und einer Temperatur von etwa 107 bis 135°C gearbeitet. Ferner kann zur Einstellung des pH-Wertes zusätzlich Kaliumhydroxid zugesetzt werden. Abgesehen davon, daß sich im wesentlichen würfelförmige Kristalle bilden, besitzen diese selbst bei relativ hohen Salzkonzentrationen neben der Bernsteinsäure keine zufriedenstellende Größenverteilung, der Hauptanteil der Kristalle ist zu klein.

Außerdem ist es beispielsweise aus DE 38 19 652 C2 bekannt, Trocken- und Naßverfahren zu kombinieren, indem man poröse Dihydrat-Formkörper preßt, in die beim Autoklavieren darauf kondensiertes Wasser unter gleichzeitigem Wärmetransport eindringt, so daß sich im Bereich der Poren, also mikroskopisch, die Umkristallisation abspielt, die langsam und unter Bildung von überwiegend fleischigen, großen Kristallen mit einem mittleren Korndurchmesser > 20 µm, insbesondere im Bereich von 40 bis 60 µm, die sich zu gedrungenen Kristallen vermahlen lassen, erfolgt. Aber auch hier bleiben zugegebene Kristallisationshilfsmittel, die in relativ großer Menge einzusetzen sind, erhalten.

Entsprechendes gilt für Kristallisationshilfsmittel wie Malein-, Adipinsäure od.dgl. ebenso wie für anorganische Mittel wie Fe- oder Al-Salze, d.h. daß sie in unerwünscht hohen Konzentrationen im Produkt bleiben und zu störenden Eigenschaften im späteren Bindemittel führen. Ohne Kristallisationshilfsmittel erzielt man nur ein Fasergewölle und mit rein organischen Kristallisationshilfsmitteln, die zudem gewöhnlich die Umkristallisation verzögern, läßt die Kristalltracht noch zu wünschen übrig. Außerdem führen die bekannten Kristallisationshilfsmittel gewöhnlich zu einer unerwünschten Schalenbildung.

Abgesehen davon strebt man hierbei möglichst längliche, säulenförmige Kristalle aus Calciumsulfat-Alphahalbhydrat an, da bei Bildung von im wesentlichen würfelförmigen Kristallen die Formkörper beim Autoklavieren oder anschließenden Trocknen zerfallen würden.

Aufgabe der Erfindung ist es, ein Verfahren nach dem Oberbegriff des Anspruchs 1 zu schaffen, bei dem die Kristallisationshilfsmittel zu keinen störenden Eigenschaften im späteren Bindemittel und zu gedrungenen, säulenförmigen Calciumsulfat-Alphahalbhydratkristallen führen.

Diese Aufgabe wird entsprechend Anspruch 1 dadurch gelöst, daß bei einem Verfahren zum Herstellen von Calciumsulfat-Alphahalbhydrat, bei dem Calciumsulfat-Dihydrat insbesondere aus der Rauchgasentschwefelung zu porösen Formkörpern gepreßt wird und die Formkörper bei Temperaturen im Bereich von 125 bis 150°C und einem Druck von 2,5 bis 5 bar unter Sattdampfbedingungen sowie in Anwesenheit eines wasserlöslichen Kristallisationshilfsmittels autoklaviert werden, als Kristallisationshilfsmittel Kalium- und/oder Ammoniumionen liefernde Verbindungen in einer Menge von 0,02 bis 0,1 Gew.-%, bezogen auf das trockene Calciumsulfat-Dihydrat, derart abgestimmt verwendet werden, daß sich längliche Calciumsulfat-Alphahalbhydrat-Kristalle mit einem Verhältnis von Länge-Dicke im Bereich von etwa 5:1 bis 15:1 und einem D₅₀-Wert der Partikelgröße > 40µm bilden.

Hierbei ist eine Kaliumionen liefernde Verbindung bevorzugt, und es wird insbesondere als Kalium- und/oder Ammoniumionen liefernde Verbindung ein Salz einer anorganischen oder organischen Säure oder eine Lauge eingesetzt, insbesondere Kaliumsulfat, Kaliumhydroxid, Kaliumditartrat oder auch Kaliumphosphat, Kaliumacetat od.dgl., oder entsprechende Ammoniumverbindungen wie Ammoniumhydroxid od.dgl.. Die Kalium-bzw. Ammoniumionen liefernde Verbindung wird zweckmäßigerweise in einer Menge von 0,02 bis 0,1, vorzugsweise 0,04 bis 0,08 Gew.-% (beim Kalium berechnet als K₂O, beim Ammonium berechnet als NH₄) bezogen auf das trockene Calciumsulfat-Dihydrat verwendet. Die verwendete, sehr geringe Menge hängt insbesondere von der Löslichkeit der Verbindung unter den bei der Umkristallisation zum Alphahalbhydrat verwendeten Autoklavierbedingungen ab.

Wenn eine Neutralisierung des Calciumsulfat-Dihydrats, von dem ausgegangen wird, erwünscht ist, wird zweckmäßigerweise Kaliumhydroxid verwendet. In diesem Fall kann auch Weinsäure in solcher Menge zugesetzt werden, das sich die gesamte Weinsäure mit einem Teil des Kaliumhydroxids in Kaliumditartrat umsetzt. Aber auch dann sollte der Anteil an Weinsäure möglichst gering gehalten werden.

Die verwendete sehr geringe Menge führt aber überraschend trotzdem überwiegend zu fleischigen, säulenförmigen Kristallen mit einem Verhältnis von Länge/Dicke im Bereich von etwa 5:1 bis 15:1 und einem D₅₀-Wert der Partikelgröße > 40µm (Durchmesser in Richtung der Dicke). Im allgemeinen liegt der Durchmesser (in Richtung der Dicke) der Partikel im Bereich von etwa 40 bis 90 µm. Infolge der Ausbildung der säulenförmigen Kristalle sind diese ineinander verhakt, so daß die Formkörper auch während und nach der Umkristallisation als auch beim anschließenden Trocknen eine genügende Festigkeit behalten und damit zusammenhalten, so daß sie dementsprechend problemlos dem Autoklaven entnommen, getrocknet und weiterverarbeitet werden können.

Ein derartiges Kristallisationshilfsmittel beeinflußt offenbar die Löslichkeit des CaSO₄ und führt trotz seines geringen mengenmäßigen Einsatzes zu gedrungenen, großen säulenförmigen Alphahalbhydratkristallen. Eine Schalenbildung wurde hierbei nicht beobachtet. Außerdem wird durch dieses Kristallisationshilfsmittel die Umwandlung im allgemeinen beschleunigt, während der Gehalt an Kalium bzw. Ammonium nach der Umkristallisation nur sehr geringfügig ist.

Die Wirkung des Kristallisationshilfsmittels, das vorzugsweise bereits dem zu Formkörpern zu verpressenden Calciumsulfat-Dihydrat, das anschließend autoklaviert wird, zugesetzt wird, beruht möglicherweise darauf, daß Mischkristalle beispielsweise in Form von K₂SO₄.CaSO₄.H₂O bzw. des entsprechenden Ammoniummischkristalls gebildet werden dürften, wobei die eingebauten Kalium- bzw. Ammoniumsulfate wohl eine ähnliche Morphologie wie CaSO₄.H₂O aufweisen und eventuell als Kristallisationskatalysator wirken.

Als Calciumsulfat-Dihydrat wird vorzugsweise industriell anfallender Gips, und zwar insbesondere REA-Gips vorzugsweise aus der Rauchgasentschwefelung von Braunkohlenkraftwerken eingesetzt.

Ein Zusatz eines Kristalltrachtmodifikators etwa in Form einer Oxycarbonsäure ist nicht erforderlich und unerwünscht.

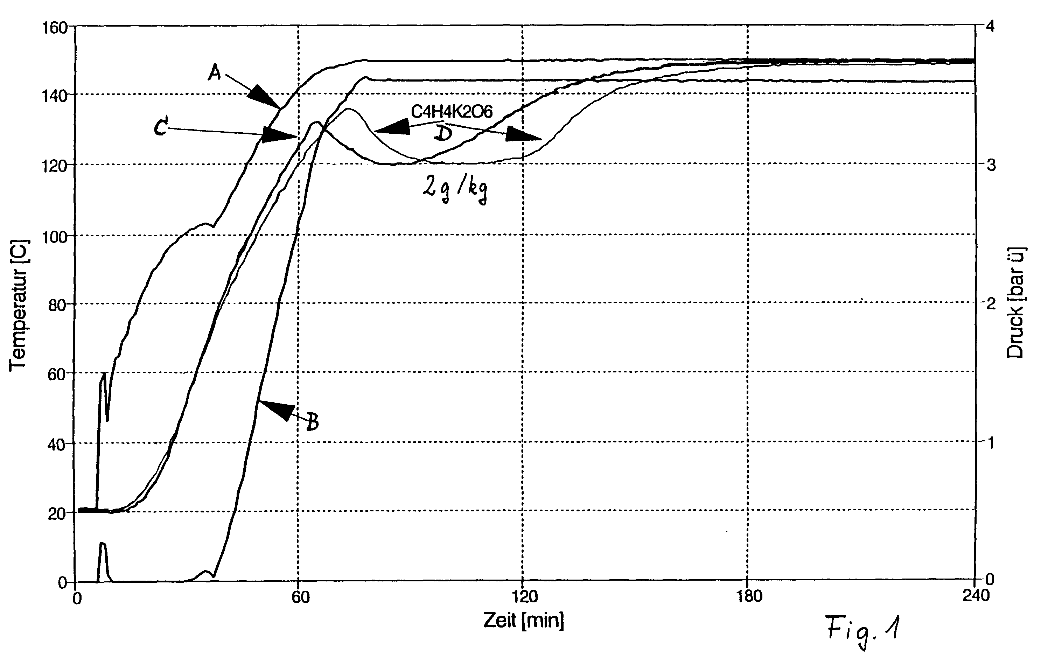

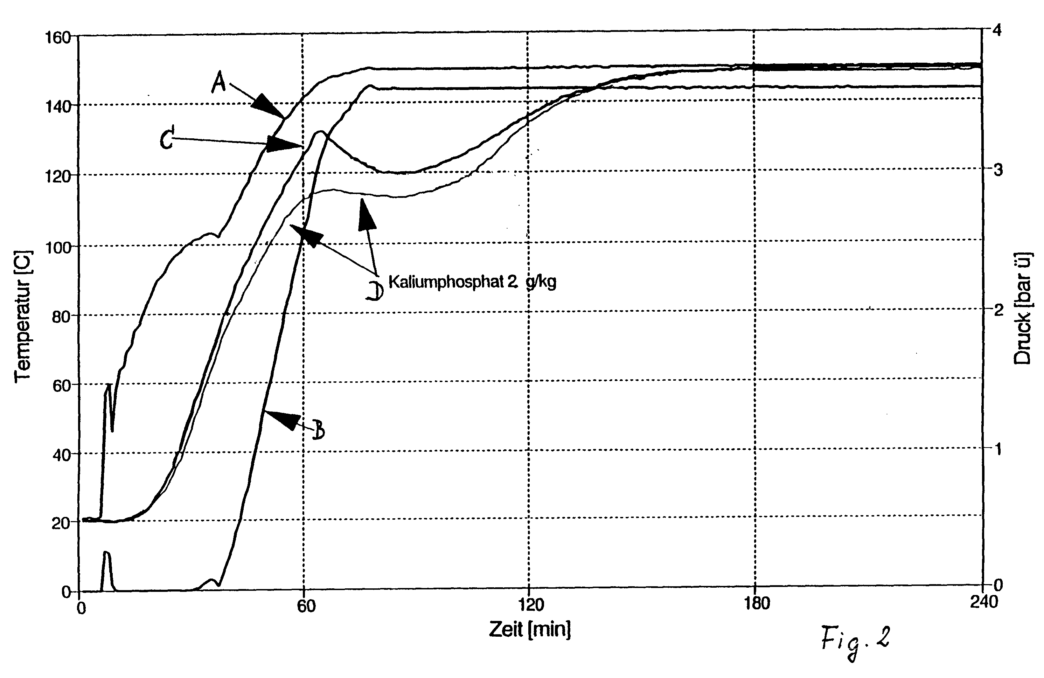

Fig. 1 und 2 zeigen zwei Diagramme bezüglich einer Umkristallisation von Calciumsulfat-Dihydrat in Calciumsulfat-Alphahalbhydrat in einem Autoklaven entsprechend DE 38 19 652 C2 mit Kaliumtartrat (Fig. 1) und Kaliumphosphat (Fig. 2) als Kristallisationshilfsmittel, das dem Calciumsulfat-Dihydrat bei der Herstellung der zu autoklavierenden Formkörper in einer Menge von 2g/kg Dihydrat zugesetzt wurde. Hierbei sind die Temperatur bzw. der Druck gegenüber der Autoklavierzeit aufgetragen. Die jeweiligen Kurven A und B zeigen den zeitlichen Temperatur- bzw. Druckverlauf der Atmosphäre im Autoklaven, während die jeweiligen Kurven C und D den zeitlichen Verlauf der Kerntemperatur in den Formkörpern ohne bzw. mit Zusatz von Kristallisationshilfmittel zeigen. Hierbei hatte der aus der Rauchgasentschwefelung eines Braunkohlekraftwerks stammende REA-Gips folgende prozentuale Zusammensetzung:

| | |
|---|---|
| Gipsgehalt | 97,3 |
| Ca- und Mg-Carbonat | 1,8 |
| Si unlösl. | 0,42 |
| MgO | 0,009 |
| Na₂O | 0,01 |
| Ka₂O | 0,005 |
| Al₂O₃ | 0,028 |
| Eisen-I-oxid | 0,05 |
| Rest geringe Anteile anderer Substanzen | |

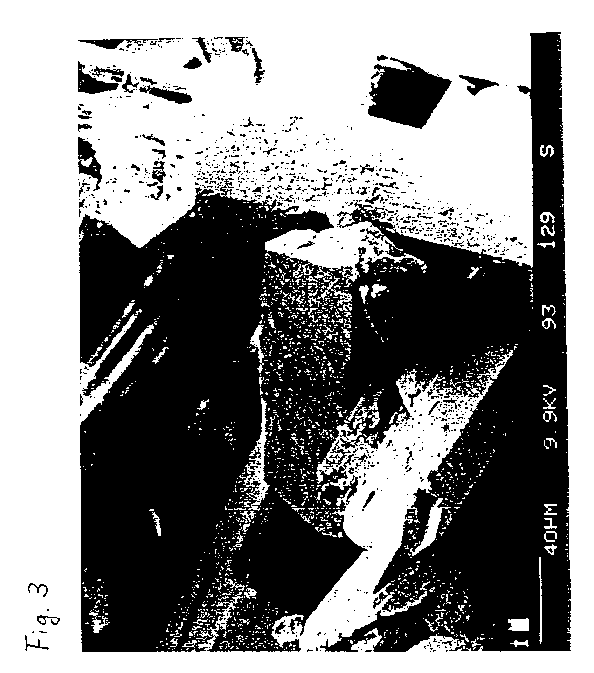

Der zeitliche Verlauf der Kurven C und D ist sehr unterschiedlich ebenso wie das Ergebnis, eine Umkristallisierung ohne das Kristallisationshilfsmittel führt zu einem Fasergewölle, mit Kristallisationshilfsmittel zu kräftigen, gedrungenen Kristallen entsprechend Fig. 3, die eine REM-Aufnahme einer Probe von Calciumsulfat-Alphahalbhydrat, hergestellt mit 0,1 Gew.-% Kaliumtartrat als Kristallisationshilfsmittel, zeigt.

Setzt man dagegen entsprechend Natriumsulfat, Calciumchlorid und Aluminiumsulfat jeweils in einer Menge von 0,2 und 0,6 Gew.-% bezogen auf den trockenen REA-Gips ein und autoklaviert die entsprechenden Formkörper etwa gemäß Kurve C von Fig. 1, stellt man durch lichtmikroskopische Untersuchung fest, daß im Falle von Natriumsulfat und Aluminiumsulfat ca. 20 µm dicke, längliche Fibrillenbündel entstanden sind, die bei mechanischer Beanspruchung (Mahlung) in die einzelnen Fibrillen zerfallen. Zusätzlich sind hohe Feinstaubanteile enthalten, und im Randbereich befinden sich lose Fibrillen, sogenannte "Spaghetti".

Im Falle von Calciumchlorid ergibt sich ein ähnliches Bild, allerdings sind die Fibrillenbündel größer, sie zerfallen aber ebenso bei mechanischer Belastung. Derartige Kristallformen entsprechen nicht den materialtechnischen Anforderungen.

## Patentansprüche

1. Verfahren zum Herstellen von Calciumsulfat-Alphahalbhydrat, bei dem Calciumsulfat-Dihydrat insbesondere aus der Rauchgasentschwefelung zu porösen Formkörpern gepreßt wird und die Formkörper bei Temperaturen im Bereich von 125 bis 150°C und einem Druck von 2,5 bis 5 bar unter Sattdampfbedingungen sowie in Anwesenheit eines wasserlöslichen Kristallisationshilfsmittels autoklaviert werden, **dadurch gekennzeichnet, daß** als Kristallisationshilfsmittel Kalium- und/oder Ammoniumionen liefernde Verbindungen in einer Menge von 0,02 bis 0,1 Gew.-%, bezogen auf das trockene Calciumsulfat-Dihydrat, derart abgestimmt verwendet werden, daß sich längliche Calciumsulfat-Alphahalbhydrat-Kristalle mit einem Verhältnis von Länge/Dicke im Bereich von etwa 5:1 bis 15:1 und einem D₅₀-Wert der Partikelgröße > 40µm bilden.

2. Verfahren nach Anspruch 1, **dadurch gekennzeichnet, daß** als Kalium- und/oder Ammoniumionen liefernde Verbindung ein entsprechendes Salz einer anorganischen oder organischen Säure oder eine Lauge verwendet wird.

3. Verfahren nach Anspruch 1 oder 2, **dadurch gekennzeichnet, daß** als Kaliumionen-liefernde Verbindung Kaliumsulfat, Kaliumhydroxid und/oder ein Kaliumsalz einer Oxycarbonsäure, insbesondere Kaliumditartrat, verwendet wird.

4. Verfahren nach Anspruch 1 oder 2, **dadurch gekennzeichnet, daß** als NH₄⁺-liefernde Verbindung Ammoniumsulfat, Ammoniumhydroxid und/ oder ein Ammoniumsalz einer Oxycarbonsäure, insbesondere Ammoniumditartrat, verwendet wird.

## Claims

1. Method of producing calcium sulphate alpha-hemihydrate, in which calcium sulphate dihydrate, particularly from a flue gas desulphurisation process, is pressed to form porous shaped bodies and the shaped bodies are autoclaved at temperatures in the range of 125 to 150°C and a pressure of 2.5 to 5 bar under saturated steam conditions and in the presence of a water-soluble crystallisation adjuvent, **characterised in that** compounds, which supply potassium and/or ammonium ions, are used as the crystallisation adjuvent in an amount of 0.02 to 0.1% by wt., with respect to the dry calcium sulphate dihydrate, matched so that elongate calcium sulphate alpha-hemihydrate crystals form with a ratio of length/thickness in the range of about 5:1 to 15:1 and a D₅₀ value of the particle size > 40µm.

2. Method as claimed in claim 1, **characterised in that** an appropriate salt of an inorganic or organic acid or a lye solution is used as the compound supplying potassium and/or ammonium ions.

3. Method as claimed in claim 1 or 2, **characterised in that** potassium sulphate, potassium hydroxide and/or a potassium salt of an oxycarbonic acid, particularly potassium ditartrate, is used as the compound supplying potassium ions.

4. Method as claimed in claim 1 or 2, **characterised in that** ammonium sulphate, ammonium hydroxide and/or an ammonium salt of an oxycarbonic acid, particularly ammonium ditartrate, is used as the NH₄- supplying compound.

## Revendications

1. Procédé pour la préparation d'alpha hémi-hydrate de sulfate de calcium, dans lequel on comprime du dihydrate de sulfate de calcium, en particulier provenant de la désulfuration de gaz de fumées, en des masses moulées poreuses et on autoclave les masses moulées à des températures dans l'intervalle de 125 à 150°C et sous une pression de 2,5 à 5 bar dans des conditions de vapeur saturante, ainsi qu'en présence d'un adjuvant de cristallisation hydrosoluble, **caractérisé par le fait qu'**on utilise comme adjuvant de cristallisation des composés fournissant des ions potassium et/ou ammonium, en une quantité de 0,02 à 0,1 % en poids, par rapport au dihydrate de sulfate de calcium sec, de telle manière qu'il se forme des cristaux allongés d'alpha hémi-hydrate de sulfate de calcium avec un rapport de longueur/épaisseur dans l'intervalle d'environ 5:1 à 15:1 et un indice D₅₀ de taille de particules > 40 µm.

2. Procédé selon la revendication 1, **caractérisé par le fait qu'**on utilise comme composé fournissant des ions potassium et/ou ammonium un sel correspondant d'un acide inorganique ou organique ou une lessive alcaline.

3. Procédé selon la revendication 1 ou 2, **caractérisé par le fait qu'**on utilise comme composé fournissant des ions potassium le sulfate de potassium, l'hydroxyde de potassium et/ou un sel de potassium d'un acide oxycarboxylique, en particulier le tartrate double de potassium.

4. Procédé selon la revendication 1 ou 2, **caractérisé par le fait qu'**on utilise comme composé fournissant des ions NH₄⁺ le sulfate d'ammonium, l'hydroxyde d'ammonium et/ou un sel d'ammonium d'un acide oxycarboxylique, en particulier le tartrate double d'ammonium.
